# EUROPÄISCHE PATENTANMELDUNG

(11) **EP 4 800 890 A2**
(43) Veröffentlichungstag der Anmeldung: **02.09.2026**
(21) Anmeldenummer: 26177458.2
(22) Anmeldetag: 14.02.2023
(51) Int. Cl.: H02K 1/32

(54) **ROTORANORDNUNG FÜR EINE FREMDERREGTE SYNCHRONMASCHINE**

(30) Priorität: 16.02.2022 DE 102022201589
(62) Dokumentnummer(n) der früheren Anmeldung(en) nach Art. 76 EPÜ: 23705383.0 / 4 480 076
(71) Anmelder: ZF Friedrichshafen AG, 88046 Friedrichshafen (DE)
(72) Erfinder: Dieckhoff, Tobias, 97078 Würzburg (DE); Raimann, Manuel, 88682 Salem (DE); Michelberger, Robin, 97422 Schweinfurt (DE); Budach, Rene, 97688 Bad Kissingen (DE); Kraft, Philipp, 97199 Ochsenfurt (DE)
(74) Vertreter: ZF Friedrichshafen AG

(57) **Zusammenfassung**

Vorgeschlagen wird eine Rotoranordnung (1) für eine fremderregte Synchronmaschine. Die Rotoranordnung umfasst eine als Hohlwelle ausgebildete Rotorwelle für wenigstens eine Erregerwicklung, einen innerhalb der Rotorwelle angeordneten Transformator zur berührungslosen Übertragung eines für eine Rotorfelderzeugung benötigten Stroms auf die Erregerwicklung, wobei der Transformator eine statorfeste Primärseite und eine demgegenüber um eine Drehachse verdrehbare und mit der Rotorwelle drehfest gekoppelte Sekundärseite aufweist; und einen axial in einen Hohlraum der Rotorwelle hineinragenden, statorfesten Träger. der mechanisch mit der Primärseite des Transformators gekoppelt ist, wobei der Träger hohl ausgebildet ist, um durch einen Hohlraum des Trägers ein Kühlmittel in die Rotorwelle hineinzuleiten.

## Beschreibung

Die vorliegende Erfindung bezieht sich allgemein auf elektrische Maschinen und insbesondere auf Rotoranordnungen für fremderregte Synchronmaschinen.

Fremderregte Synchronmaschinen als Antriebe für Fahrzeuge, wie zum Beispiel PKWs, verwenden zur Übertragung eines für eine Rotorfelderzeugung notwendigen Stroms vom stehenden auf ein drehendes System konduktive Übertragungseinrichtungen. Diese können beispielsweise als Kohlebürsten- oder Schleifringanordnungen ausgeführt sein. Darüber hinaus sind auch berührungslose Übertragungseinrichtungen bekannt, die insbesondere auf induktiver Übertragung basieren. Dabei handelt es sich im Wesentlichen um Transformatoren, deren Primär- und Sekundärseite durch einen Luftspalt voneinander getrennt und gegeneinander drehbar ausgeführt sind. Auf der Sekundärseite befindet sich ferner eine Gleichrichterschaltung, um den für die Übertragung notwendigen Wechselstrom in einen für eine Magnetfelderzeugung notwendigen Gleichstrom zu wandeln.

Im Vergleich zu einer permanenterregten Synchronmaschine benötigt eine fremderregte Synchronmaschine statt Permanentmagnete im Rotor zusätzlich unter anderem eine Erregerwicklung am Rotor sowie eine Übertragungseinrichtung für den Strom vom stehenden System auf den Rotor. Eine Herausforderung besteht darin, insbesondere die Übertragungseinrichtung möglichst so auszugestalten und anzuordnen, dass keine - bzw. möglichst wenig zusätzliche Baulänge der elektrischen Maschine (E-Maschine) resultiert. Eine weitere Herausforderung liegt darin, dass bei bisher bekannten Lösungen üblicherweise der Bauraum unterhalb der Wickelköpfe der Statorwicklung für die Anordnung des Übertragers oder der Gleichrichter-Elektronik genutzt wird und hier einerseits ausgehend von den Wickelköpfen hohe Temperaturen herrschen und andererseits eine Kühlung erschwert ist. Zusätzliche Dichtungen und Kapselungen sind aus Effizienz- und Kostengründen ebenfalls zu vermeiden.

Aus dem Stand der Technik ist hierzu beispielsweise aus der EP 3 920 385 A1 eine elektrische Maschine mit einem in den Rotor integrierten Energieübertragungssystem einer Erregereinrichtung bekannt.

Somit besteht ein Bedarf an berührungslosen Übertragungssystemen für fremderregte Synchronmaschinen mit geringer Baulänge und guter Kühlmöglichkeiten.

Diesem Bedarf wird durch Rotoranordnungen und fremderregte Synchronmaschinen gemäß der unabhängigen Ansprüche Rechnung getragen. Vorteilhafte Weiterbildungen sind Gegenstand der abhängigen Ansprüche.

Vorgeschlagen wird eine Rotoranordnung für eine fremderregte Synchronmaschine. Die Rotoranordnung umfasst eine als Hohlwelle ausgebildete Rotorwelle für wenigstens eine Erregerwicklung. Die Rotoranordnung umfasst ferner einen innerhalb der Rotorwelle (Hohlwelle) angeordneten Transformator zur berührungslosen (induktiven) Übertragung eines für eine Rotorfelderzeugung benötigten Stroms auf die Erregerwicklung. Die vorgeschlagene Lösung sieht also vor, eine induktive EnergieÜbertragungseinrichtung (Transformator) innerhalb der Hohlwelle der E-Maschine anzuordnen. Hierdurch kann eine deutliche Bauraumeinsparung erreicht werden.

Bei erfindungsgemäßen Ausführungen weist der Transformator innerhalb der Rotorwelle eine statorfeste Primärseite und eine demgegenüber um eine Drehachse verdrehbare und mit der Rotorwelle drehfest gekoppelte Sekundärseite auf. Die Primärseite des innerhalb der Rotorwelle angeordneten Transformators kann also an das stehende System der fremderregten Synchronmaschine gekoppelt sein, während die Sekundärseite des Transformators an die rotierbare Rotorwelle gekoppelt ist.

Weiter weisen erfindungsgemäße Ausführungen der Rotoranordnung ferner einen axial in einen Hohlraum der Rotorwelle hineinragenden, statorfesten Träger auf, der mechanisch mit der Primärseite des Transformators gekoppelt ist. Der Träger für die Primärseite des Transformators kann beispielsweise lanzenförmig ausgebildet sein und an dessen Außenumfang die Primärseite des Transformators tragen bzw. abstützen.

Bei Ausführungen der vorliegenden Erfindung ist der Träger für die Primärseite des Transformators hohl ausgebildet, um durch einen Hohlraum des Trägers ein Kühlmittel (wie zum Beispiel Öl) in die Rotorwelle hineinzuleiten. Gemäß manchen Ausführungsbeispielen kann der Träger als hohle, in die Rotorwelle hineinragende (Öl-)Lanze ausgebildet sein. Dadurch kann die Kühlung der Bauteile verbessert werden, indem diese von einem Ölstrom durch die Hohlwelle komplett um- bzw. durchströmt werden. Dies kann ein Vorteil gegenüber einer Anordnung beispielsweise außerhalb der Welle im Bereich der Wickelköpfe sein, da hier nur eine Ölnebelkühlung möglich ist und zusätzliche Wärme von den Wickelköpfen eingeleitet wird.

Gemäß einigen Ausführungsbeispielen der vorliegenden Erfindung kann die Rotorwelle an wenigstens einem Ende verschlossen ausgebildet sein, um das durch den Träger in die Rotorwelle einströmende Kühlmittel an dem verschlossen Ende umzulenken. Der hohl ausgebildete Träger kann beispielsweise in axialer Richtung bis kurz vor das geschlossene Ende der Rotorwelle in die Rotorwelle hineinragen. Das Kühlmittel kann am Ende des Trägers in Richtung geschlossenes Ende der Rotorwelle ausströmen und dort in die entgegengesetzte Richtung (von dem geschlossenen Ende der Rotorwelle weg) umgelenkt werden. Somit kann ein effizienter Kühlmittelstrom durch die Rotorwelle und der darin befindlichen Komponenten (zum Beispiel Transformator) erreichet werden.

Gemäß einigen Ausführungsbeispielen der vorliegenden Erfindung kann die Rotorwelle in ihrem Mantel (bzw. ihrer Mantelfläche) radiale Bohrungen aufweisen, um vor und/oder nach einem Durchströmen der Rotorwelle und des darin angeordneten Transformators mit Kühlmittel das Kühlmittel aus der Rotorwelle radial auszuleiten. Außerhalb der Rotorwelle kann das Kühlmittel dann wieder heruntergekühlt und einem Kühlmittelkreislauf erneut zugeführt werden.

Gemäß einigen Ausführungsbeispielen der vorliegenden Erfindung kann der Transformator einen statorfesten, primärseitigen Ferritkern umfassen, in welchen eine primärseitige Wicklung des Transformators eingelegt ist. Der Transformator kann außerdem einen relativ zum primärseitigen Ferritkern verdrehbaren mit der Rotorwelle drehfest gekoppelten sekundärseitigen Ferritkern umfassen, in welchen eine sekundärseitige Wicklung des Transformators eingelegt ist. Neben Ferrit sind selbstverständlich auch andere die Induktivität erhöhende weichmagnetische Materialen für Spulenkerne vorstellbar.

Gemäß einigen Ausführungsbeispielen der vorliegenden Erfindung kann die Rotoranordnung ferner einen innerhalb der Rotorwelle angeordneten und elektrisch zwischen die Sekundärseite des Transformators und die Erregerwicklung gekoppelten Gleichrichter aufweisen. Mittels des Gleichrichters kann der für die induktive Übertragung notwendige Wechselstrom in für die Magnetfelderzeugung notwendigen Gleichstrom gewandelt werden. Vorteilhafterweise kann der Gleichrichter innerhalb der Rotorwelle ebenfalls von Kühlmittel durch- bzw. umströmt werden.

Gemäß einigen Ausführungsbeispielen der vorliegenden Erfindung kann die Rotoranordnung ferner einen elektrisch mit der Primärseite des Transformators gekoppelten Wechselrichter aufweisen. Mittels des Wechselrichters kann aus Gleichstrom für die induktive Übertragung notwendiger Wechselstrom erzeugt werden. Der Wechselrichter kann innerhalb oder außerhalb der Rotorwelle angeordnet sein.

Gemäß einigen Ausführungsbeispielen der vorliegenden Erfindung kann sich die Erregerwicklung (Rotorwicklung) axial von einem Anfangsbereich bis zu einem Endbereich entlang der Rotorwelle erstrecken. Der Transformator (und gegebenenfalls auch der Gleichrichter) kann axial zwischen dem Anfangsbereich und dem Endbereich der Erregerwicklung innerhalb der Rotorwelle angeordnet sein. Somit kann vorteilhaft axialer Bauraum eingespart werden.

Es wird weiterhin eine fremderregte Synchronmaschine vorgeschlagen, umfassend einen Stator und einen Rotor mit wenigstens einer Erregerwicklung, wobei der Rotor gegenüber dem Stator mittels einer Hohlwelle drehbar gelagert ist. Innerhalb der Hohlwelle ist ein Transformator zur berührungslosen Übertragung eines für eine Rotorfelderzeugung benötigten Stroms auf die Erregerwicklung angeordnet.

Gemäß einigen Ausführungsbeispielen der vorliegenden Erfindung kann die fremderregte Synchronmaschine ferner eine axial in die Hohlwelle hineinragende statorfeste Kühlmittellanze umfassen. Die Kühlmittellanze ist ausgebildet, um eine statorfeste Primärseite des Transformators abzustützen und um Kühlmittel (wie zum Beispiel Öl) durch einen Hohlraum der Kühlmittellanze in die Hohlwelle hineinzuleiten.

Ferner wird auch ein Kraftfahrzeug mit einer fremderregten Synchronmaschine vorgeschlagen, die eine hierin beschriebene Rotoranordnung aufweist.

Im Folgenden werden einzelne Ausführungsformen der vorliegenden Erfindung anhand der Figuren beispielhaft beschrieben. Es zeigen:
- Fig. 1: eine Rotoranordnung für eine fremderregte Synchronmaschine gemäß einem Ausführungsbeispiel;
- Fig. 2: eine Ausführung einer Klemmverbindung eines inneren Ferritkerns;
- Fig. 3: einen Querschnitt durch eine Gleichrichteranordnung innerhalb einer Rotorwelle;
- Fig. 4: einen Kühlölstrom durch die Rotoranordnung; und
- Fig. 5: eine Erweiterung des vorgeschlagenen Kühlkonzepts.

Eine Synchronmaschine ist eine rotierende elektrische Maschine, in welcher der Rotor (auch Läufer genannt) synchron mit einem Drehfeld des Stators (auch Ständer genannt) läuft. Synchronmaschinen werden häufig als Drehstrommaschinen, also als Drehstrom-Synchronmaschinen ausgeführt. Die Synchronmaschine trägt ihren Namen wegen der Betriebseigenschaft, dass ihr Rotor exakt mit dem durch eine Netzfrequenz vorgegebenen Drehfeld synchron umläuft.

Im Rotor wird ein konstantes Magnetfeld erzeugt. Dies geschieht entweder durch einen Permanentmagnet (permanenterregt) oder durch eine elektromagnetische Fremderregung (fremderregt). Je nach Bauart der Synchronmaschine kann der Rotor als Schenkelpolläufer oder Vollpolläufer ausgeführt sein. Im Gegensatz dazu wird im Stator ein magnetisches Drehfeld erzeugt, beispielsweise durch eine Erzeugung dieses Drehfelds durch Dreiphasenwechselstrom. Dafür können im Stator drei um 120° versetzt angeordnete Induktivitäten verbaut sein. Es versteht sich, dass auch mehr oder weniger Phasen zum Einsatz kommen können.

Vom Prinzip her kann jede Synchronmaschine als elektrischer Motor und elektrischer Generator betrieben werden. Beim Betrieb der Synchronmaschine als Generator wird der Rotor extern mechanisch angetrieben. Handelt es sich um einen fremderregten Rotor, so muss dieser entsprechend erregt werden. Das Magnetfeld des Rotors induziert in die Statorwicklungen periodisch eine Spannung. Diese Spannung wird als Polradspannung bezeichnet. Beim Motorbetrieb wird an die Synchronmaschine von außen zum Beispiel eine Dreiphasenwechselspannung angelegt. Das dadurch erzeugte magnetische Drehfeld des Stators setzt den Rotor in Bewegung. Die Maschine kann dadurch eine externe mechanische Last, wie zum Beispiel ein Kraftfahrzeug, antreiben.

Die vorliegende Erfindung betrifft Rotoranordnungen für fremderregte Synchronmaschinen, welche beispielsweise in (teil-)elektrisch betriebenen Kraftfahrzeugen zum Einsatz kommen können.

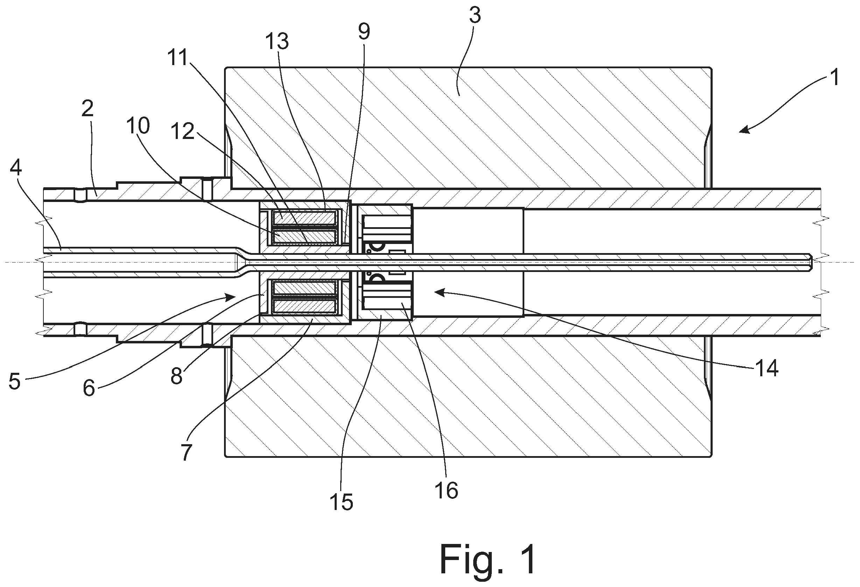

**Fig. 1** zeigt eine Rotoranordnung 1 für eine fremderregte Synchronmaschine gemäß einem Ausführungsbeispiel der vorliegenden Erfindung.

Die beispielhafte Rotoranordnung 1 umfasst eine als Hohlwelle ausgebildete Rotorwelle 2. Die Rotorwelle 2 kann an ihrem Außenumfang mittels eines Rotorblechpakets 3 wenigstens eine Erregerwicklung bzw. Rotorwicklung (nicht dargestellt) tragen. Innerhalb der hohlen Rotorwelle 2 ist eine induktive Übertragungseinrichtung 5 (Transformator) zur berührungslosen (induktiven) Übertragung eines für eine Rotorfelderzeugung benötigten Stroms auf die wenigstens eine Erregerwicklung angeordnet. Durch die Anordnung der induktiven Übertragungseinrichtung 5 innerhalb der Rotorwelle 2 kann vorteilhaft Bauraum eingespart werden.

Die in Fig. 1 gezeigte Rotoranordnung 1 wird im Wesentlichen durch die hohle Rotorwelle 2 gebildet, an deren Außenumfang das Rotorblechpaket 3 angeordnet ist. Eine oder mehrere in das Rotorblechpaket 3 eingelegte Rotorerregerwicklungen sind in Fig. 1 nicht dargestellt. Ebenso nicht dargestellt sind radial außerhalb der Rotoranordnung 1 bzw. des Rotorblechpakets 3 angeordnete und feststehende Statorwicklungen der fremderregten Synchronmaschine.

Das am Außenumfang der Rotorwelle 2 angeordnete Rotorblechpaket 3 erstreckt sich axial von einem Anfangsbereich (links) bis zu einem Endbereich (rechts) entlang der Rotorwelle 2. Im Anfangsbereich (links) des Rotorblechpakets 3 kann am Außenumfang der Rotorwelle 2 ein Wellenabsatz als axialer Anschlag für das Rotorblechpaket 3 vorgesehen sein. Der Transformator 5 ist in dem dargestellten Ausführungsbeispiel axial zwischen dem Anfangsbereich und dem Endbereich des Rotorblechpakets 3 innerhalb der Rotorwelle 2 angeordnet. Dadurch wird kein zusätzlicher axialer Bauraum für den Transformator 5 benötigt. Es versteht sich allerdings, dass der Transformator 5 grundsätzlich auch an anderen axialen Positionen innerhalb der Rotorwelle 2 angeordnet sein könnte, wie z.B. axial (links oder rechts) außerhalb des Rotorblechpakets 3 oder axial nur teilweise überlappend mit dem Rotorblechpaket 3.

Im Inneren der Rotorwelle 2 befindet sich bei dem dargestellten Ausführungsbeispiel eine statorfeste Öllanze 4, die von einem ersten axialen Ende (links) der Rotorwelle 2 aus in axialer Richtung (nach rechts) in den Hohlraum der Rotorwelle 2 hineinragt und welche beispielsweise Kühlöl in die Rotorwelle 2 hineinleiten kann. Andere Kühlmittel als Öl (wie zum Beispiel Luft, Wasser, oder eine andere Kühlflüssigkeit) sind ebenfalls vorstellbar. Öl hat den Vorteil, dass es gleichzeitig auch noch als Schmiermittel wirken kann. Zum ersten axialen Ende (links) der Rotorwelle 2 hin ist vorliegend ein erster (Innen-) Durchmesser der Öllanze 4 größer ausgebildet als ein zweiter (Innen-) Durchmesser der Öllanze 4 zu einem gegenüberliegenden zweiten axialen Ende (rechts) der Rotorwelle 2 hin. Durch eine Verengung von dem ersten (Innen-) Durchmesser zu dem zweiten (Innen-) Durchmesser der Öllanze 4 kann ein Druck des in die Rotorwelle 2 einströmenden Kühlöls erhöht werden. Dies kann sich vorteilhaft auf eine Strömungsgeschwindigkeit des Öls und damit dessen Kühlwirkung auswirken.

Ferner dient die Öllanze 4 im dargestellten Ausführungsbeispiel auch als Träger für eine statorfeste Primärseite des Transformators 5. Der im Innern der Rotorwelle 2 befindliche Transformator 5 weist in dem gezeigten Ausführungsbeispiel einen statorfesten, primärseitigen Ferritkern 6 auf, in welchen eine primärseitige Wicklung 10 des Transformators 5 eingelegt ist. Diese kann beispielsweise als Flachband- oder HF-Litzen-Wicklung (HF = Hochfrequenz) ausgeführt sein und kann von einem primärseitigen Wicklungsträger 11 umgeben sein. Der primärseitige Wicklungsträger 11 kann die Aufgabe haben, die primärseitige Wicklung 10 bei der Montage in Form zu halten sowie aus Sicherheitsgründen eine erhöhte elektrische Isolation des Wicklungspakets gegenüber dem primärseitigen Ferritkern 6 und damit dem Stator (nicht gezeigt) darzustellen. Der primärseitige Ferritkern 6 ist mit der Öllanze 4 mechanisch fest verbunden und damit statorfest. Der primärseitige Ferritkern 6 ist rotationssymmetrisch und an einem Außenumfang der Öllanze 4 angebracht. Ferner kann der primärseitige Ferritkern 6 einen axialen Abschnitt und einen radial nach außen weisenden Abschnitt umfassen. In dem in Fig. 1 gezeigten Ausführungsbeispiel ist der axiale Abschnitt des primärseitigen Ferritkerns 6 mit dem Außenumfang der Öllanze 4 fest gekoppelt.

Der zweite Teil des Transformators 5 umfasst einen relativ zum primärseitigen Ferritkern 6 verdrehbaren mit der Rotorwelle 2 an deren Innenumfang drehfest gekoppelten sekundärseitigen Ferritkern 7, in welchen eine sekundärseitige Wicklung 12 des Transformators 5 eingelegt ist. Diese kann ebenfalls als Flachband- oder HF-Litzen-Wicklung ausgeführt sein und kann von einem sekundärseitigen Wicklungsträger 13 umgeben sein. Der sekundärseitige Wicklungsträger 13 kann die Aufgabe haben, die sekundärseitige Wicklung 12 bei der Montage in Form zu halten sowie aus Sicherheitsgründen eine erhöhte elektrische Isolation des Wicklungspakets gegenüber dem sekundärseitigen Ferritkern 7 und damit dem Rotor darzustellen. Der sekundärseitige Ferritkern 7 ist mit der Rotorwelle 2 mechanisch verbunden und damit rotorfest. Der sekundärseitige Ferritkern 7 ist rotationssymmetrisch und an einem Innenumfang der Rotorwelle 2 angebracht. Ferner kann der sekundärseitige Ferritkern 7 einen axialen Abschnitt und einen radial nach innen weisenden Abschnitt umfassen. In dem in Fig. 1 gezeigten Ausführungsbeispiel ist der axiale Abschnitt des sekundärseitigen Ferritkerns 7 mit dem Innenumfang der Rotorwelle 2 drehfest gekoppelt. Die Wicklungen 10 und 12 werden von den axialen und radialen Abschnitten der Ferritkerne 6 und 7 eingerahmt.

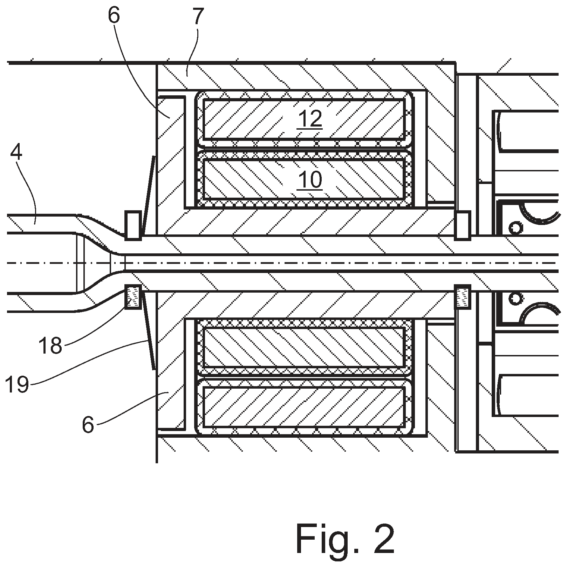

Da Ferrit spröde ist, sollten bei einer Montage der Rotoranordnung 1 möglichst keine Zugspannungen eingeleitet werden. Der in die Rotorwelle 2 eingesetzte sekundärseitige Ferritkern 7 kann beispielsweise in die Rotorwelle 2 eingepresst werden, da hierbei Druckspannungen im Material auftreten. Auf diese Weise kann er auch unter Fliehkrafteinwirkung nach außen durch die Rotorwelle 2 optimal abgestützt werden. Der primärseitige Ferritkern 6 sollte jedoch nicht auf die Öllanze 4 gepresst (geschrumpft) werden, da er in Folge von Zugspannungen zerbrechen könnte. Hier kann entweder eine Klebeverbindung vorteilhaft sein, oder eine mechanische Verbindung, bei der der primärseitige Ferritkern 6 axial geklemmt oder über einen Formschluss gehalten wird. **Fig. 2** zeigt dazu eine mögliche Ausführung einer Klemmverbindung des inneren primärseitigen Ferritkerns 6. Hierbei dienen zwei Sprengringe 18 auf axial gegenüberliegenden Seiten des primärseitigen Ferritkerns 6 als axiale Anlage gegenüber der Öllanze 4. Zwischen einem der Sprengringe 18 (beispielsweise dem der Verengung der Öllanze 4 zugewandten) und dem primärseitigen Ferritkern 6 kann eine Tellerfeder 19 eine notwendige Anpresskraft sicherstellen.

Die Primärseite bzw. primärseitige Wicklung 10 des Transformators 5 kann mit einem elektrischen Wechselrichter (nicht dargestellt) elektrisch verbunden werden, welcher den zur Funktion des Transformators 5 notwendigen Wechselstrom bereitstellt. Die Sekundärseite bzw. sekundärseitige Wicklung 12 kann mit einer Gleichrichteranordnung 14 elektrisch verbunden werden. Diese ist notwendig, um den Wechselstrom in einen Gleichstrom zu wandeln, welcher zum Aufbau des Rotor-Erregerfelds benötigt wird.

Im dargestellten Ausführungsbeispiel ist die zwischen Sekundärseite des Transformators 5 und Erregerwicklung gekoppelte Gleichrichteranordnung 14 ebenfalls im Innern der hohlen Rotorwelle 2 angeordnet. Die Gleichrichteranordnung 14 ist in dem dargestellten Ausführungsbeispiel ebenfalls axial zwischen dem Anfangsbereich und dem Endbereich des Rotorblechpakets 3 innerhalb der Rotorwelle 2 angeordnet. Dadurch wird kein zusätzlicher axialer Bauraum für die Gleichrichteranordnung 14 benötigt. Es versteht sich allerdings, dass die Gleichrichteranordnung 14 grundsätzlich auch an anderen axialen Positionen innerhalb der Rotorwelle 2 angeordnet sein könnte, wie z.B. axial (links oder rechts) außerhalb des Rotorblechpakets 3 oder axial nur teilweise überlappend mit dem Rotorblechpaket 3.

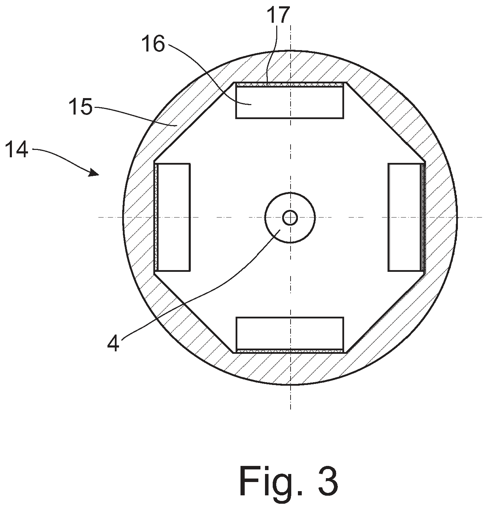

**Fig. 3** zeigt einen schematischen Querschnitt durch die Gleichrichteranordnung 14.

Die Gleichrichteranordnung 14 umfasst im Wesentlichen ein Gleichrichtergehäuse 15, welches in die Rotorwelle 2 eingeschoben und mit dieser mechanisch (drehfest) verbunden werden kann, sowie elektronischen Bauelementen, wie zum Beispiel Gleichrichterdioden 16. Ein Außenumfang des Gleichrichtergehäuses 15 ist an den Innenumfang der Rotorwelle 2 angepasst. Ein Innenumfang des Gleichrichtergehäuses 15 ist im vorliegenden Ausführungsbeispiel mehreckig (hier: oktogonal) ausgebildet, so dass die Gleichrichterdioden 16 auf tangentialen Flächen im Inneren des Gleichrichtergehäuses 15 angeordnet werden können. Die Gleichrichterdioden 16 können über Isolierpads 17 elektrisch isolierend aber thermisch möglichst gut leitend mit dem Gleichrichtergehäuse 15 verbunden sein. Das Gleichrichtergehäuse 15 kann zur guten Ableitung der entstehenden Abwärme der Gleichrichterdioden 16 vorzugsweise aus Aluminium gefertigt sein. Durch die Anordnung der Gleichrichterdioden 16 auf tangentialen Flächen im Inneren des Gleichrichtergehäuses 15 können die Bauelemente gegenüber Fliehkraftwirkung optimal abgestützt werden. Die Gleichrichterschaltung ist sekundärseitig elektrisch mit der Erregerwicklung des Rotors verbunden, dies ist jedoch nicht dargestellt.

Im Betrieb der Synchronmaschine können sich Transformator 5 und Gleichrichteranordnung 14 erwärmen, weshalb eine Kühlung mit Kühlmittel (Kühlöl) vorteilhaft sein kann.

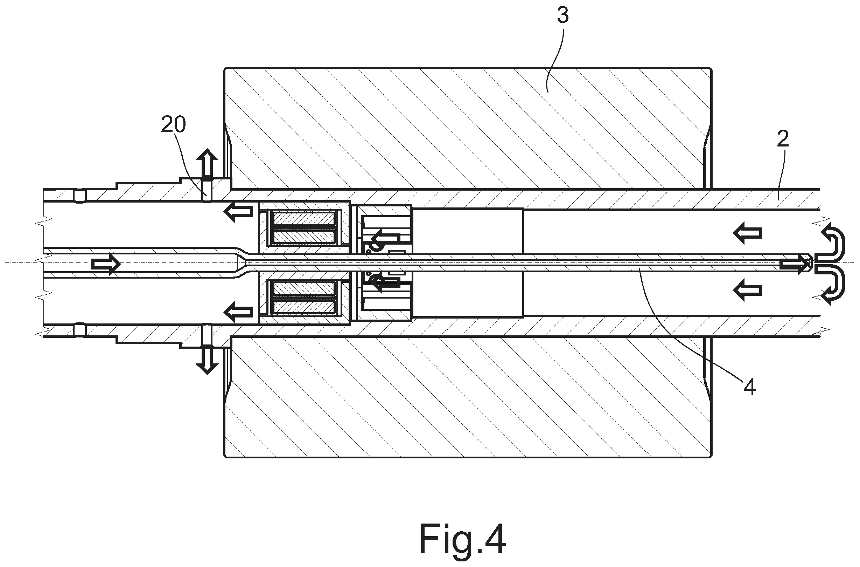

**Fig. 4** zeigt einen beispielhaften Kühlölstrom durch die Rotoranordnung 1.

Die Pfeile kennzeichnen die Flussrichtung des Öls zuerst durch die Öllanze 4 und nach Austritt aus der Öllanze 4 durch die Rotorwelle 2, die Gleichrichteranordnung 14, wobei hier die Gleichrichterdioden 16 von Öl umströmt optimal gekühlt werden können, anschließend durch einen (Luft-) Spalt 8, 9 zwischen Primär- und Sekundärseite Transformators 5, wobei insbesondere auch die primär- und sekundärseitigen Wicklungen 10, 12 gekühlt werden, und danach beispielsweise durch radiale Bohrungen 20 im Mantel der Rotorwelle 2 nach außen in Richtung der Wickelköpfe (nicht dargestellt). Die die Rotorwelle 2 kann, in Strömungsrichtung des Kühlöls gesehen nach dem Transformator 5, in ihrem Mantel also radiale Bohrungen 20 aufweisen, um nach einem Durchströmen des Gleichrichters 1 und des Transformators 5 mit Kühlöl das Kühlöl wieder aus der Rotorwelle 2 auszuleiten

In Bezug auf eine bedarfsgerechte Kühlung thermisch kritischer Stellen im Gesamtsystem kann es sinnvoll sein, nicht den gesamten über die Öllanze 4 eingeleiteten Volumenstrom durch die Strom-Übertragungseinrichtung 5 zu leiten. Hierzu können beispielsweise über Nuten oder Bohrungen an der Rotorwelle 2, den Ferritkernen 6, 7 oder dem Gleichrichtergehäuse 15 Bypässe an der Übertragungseinrichtung 5 vorbei erzeugt werden (nicht dargestellt). Die Rotoranordnung 1 kann also ausgebildet sein, einen ersten Teil des über die Lanze 4 eingebrachten Kühlmittels durch den Transformator 5 für dessen Kühlung zu leiten und einen zweiten Teil des Kühlmittels an dem Transformator 5 vorbei zur Kühlung anderer Bereiche der Synchronmaschine zu leiten.

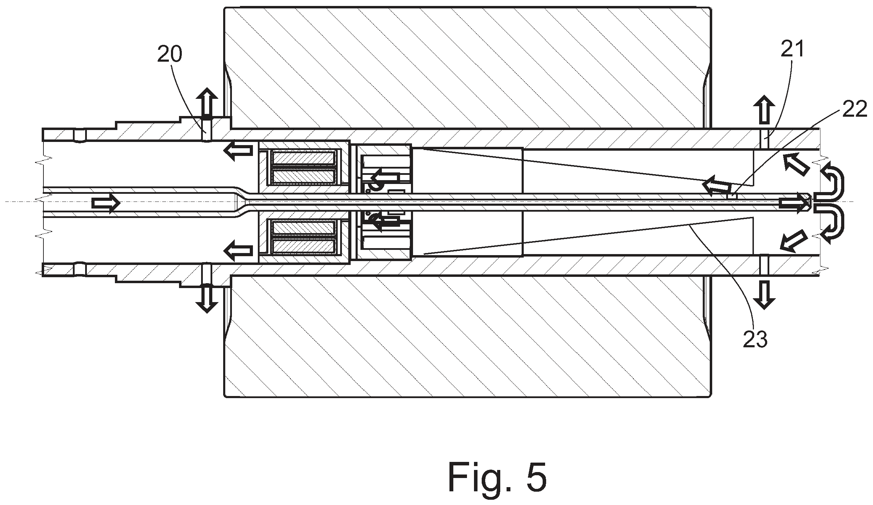

**Fig. 5** zeigt eine mögliche Erweiterung des Kühlkonzepts, die zum Ziel hat, auf beiden axialen Seiten des Rotorblechpakets 3 durch jeweilige Kühlölbohrungen 20 und 21 etwa gleich große Ölmengen aus der Rotorwelle 2 nach außen auf die Wickelköpfe des Stators zu leiten. Dies kann beispielsweise dadurch erreicht werden, dass in der Nähe einer axialen Öffnung am Ende der Öllanze 4 in der Rotorwelle 2 eine radiale Bohrung 22 im Mantel der Öllanze 4 vorhanden ist. Erste radiale Bohrungen 20 in der Rotorwelle 2 können also am axialen Anfangsbereich des Rotorblechpakets 3 vorgesehen sein, zweite radiale Bohrungen 21 können in der Rotorwelle 2 am axialen Endbereich des Rotorblechpakets 3 vorgesehen sein. Beide radialen Bohrungen 20, 21 können so aufeinander abgestimmt sein, dass jeweils eine etwa gleiche Ölmenge aus ihnen heraustreten kann. Die Rotorwelle 2 in ihrem Mantel also an beiden axialen Enden des Rotorblechpakets 3 jeweils radiale Bohrungen 20 und 21 aufweisen, um sowohl vor als auch nach einem Durchströmen des Transformators 5 mit Kühlmittel das Kühlmittel aus der Rotorwelle 2 auszuleiten.

Ferner kann ein Ölführungselement 23 im Innern der Rotorwelle 2 vorgesehen sein. Das Ölführungselement 23 kann derart gestaltet und positioniert sein, dass ein aus der axialen Öffnung am Ende der Öllanze 4 austretender Ölstrom durch die radiale Bohrung 21 der Rotorwelle 2 im Endbereich des Rotorblechpakets 3 (rechts) auf einen Wickelkopf abgeschleudert wird, während ein durch eine radiale Bohrung 22 am Ende der Öllanze 4 austretender Ölstrom durch die Fliehkraft in Richtung Transformator 5 und Gleichrichteranordnung 14 geleitet und hinter diesen durch die radiale Bohrung 20 der Rotorwelle 2 im Anfangsbereich des Rotorblechpakets 3 (links) auf den anderen Wickelkopf abgeschleudert wird. Dazu kann das Ölführungselement 23 eine kegelförmige Mantelfläche aufweisen, die sich von der Gleichrichteranordnung 14 aus zum Ende der Öllanze 4 hin verjüngt. Die radiale Bohrung 22 am Ende der Öllanze 4 kann im Bereich der Kegelspitze innerhalb des Kegels des Ölführungselements 23 angeordnet sein. Die axiale Öffnung am Ende der Öllanze 4 kann axial aus der Kegelspitze des Ölführungselements 23 herausragen. Das Ölführungselement 23 kann also ausgebildet sein, einen ersten Teil des über die Lanze 4 eingebrachten Kühlmittels durch den Gleichrichter 14 und den Transformator 5 für deren Kühlung zu leiten und einen zweiten Teil des Kühlmittels an dem Transformator 5 (und Gleichrichter 14) vorbei zur Kühlung anderer Bereiche (z.B. Statorwickelköpfe) der Synchronmaschine zu leiten.

Weiterhin sind die folgenden Ansprüche hiermit in die detaillierte Beschreibung aufgenommen, wobei jeder Anspruch als getrenntes Beispiel für sich stehen kann. Während jeder Anspruch als getrenntes Beispiel für sich stehen kann, ist zu beachten, dass - obwohl ein abhängiger Anspruch sich in den Ansprüchen auf eine bestimmte Kombination mit einem oder mehreren anderen Ansprüchen beziehen kann - andere Beispiele auch eine Kombination des abhängigen Anspruchs mit dem Gegenstand jedes anderen abhängigen oder unabhängigen Anspruchs umfassen können. Solche Kombinationen werden hier explizit vorgeschlagen, sofern nicht angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt abhängig von dem unabhängigen Anspruch gemacht ist.

### Bezugszeichen

- 1: Rotoranordnung
- 2: Hohlwelle
- 3: Rotorblechpaket
- 4: Statorfeste Öllanze
- 5: induktive Übertragereinrichtung
- 6: Primärseitiger Ferritkern
- 7: Sekundärseitiger Ferritkern
- 8: Äußerer Luftspalt
- 9: Innerer Luftspalt
- 10: Primärseitige Wicklung
- 11: Primärseitiger Wicklungsträger
- 12: Sekundärseitige Wicklung
- 13: Sekundärseitiger Wicklungsträger
- 14: Gleichrichteranordnung
- 15: Gleichrichtergehäuse
- 16: Gleichrichterdiode
- 17: Isolierpad
- 18: Sprengring
- 19: Feder
- 20: Kühlölbohrung
- 21: Kühlölbohrung
- 22: Kühlölbohrung
- 23: Ölführungselement

## Patentansprüche

1. Eine Rotoranordnung (1) für eine fremderregte Synchronmaschine, die Rotoranordnung umfassend
eine als Hohlwelle ausgebildete Rotorwelle (2) für wenigstens eine Erregerwicklung;
einen innerhalb der Rotorwelle (2) angeordneten Transformator (5) zur berührungslosen Übertragung eines für eine Rotorfelderzeugung benötigten Stroms auf die Erregerwicklung, wobei der Transformator (5) eine statorfeste Primärseite und eine demgegenüber um eine Drehachse verdrehbare und mit der Rotorwelle (2) drehfest gekoppelte Sekundärseite aufweist; und
einen axial in einen Hohlraum der Rotorwelle (2) hineinragenden, statorfesten Träger (4), der mechanisch mit der Primärseite des Transformators (5) gekoppelt ist, wobei der Träger (4) hohl ausgebildet ist, um durch einen Hohlraum des Trägers (4) ein Kühlmittel in die Rotorwelle (2) hineinzuleiten.

2. Die Rotoranordnung (1) nach Anspruch 1, wobei die Rotorwelle (2) an wenigstens einem Ende verschlossen ausgebildet ist, um das durch den Träger (4) in die Rotorwelle (2) einströmende Kühlmittel an dem verschlossen Ende umzulenken.

3. Die Rotoranordnung (1) nach einem der Ansprüche 1 oder 2, wobei der Träger (4) eine Öllanze umfasst, um ein Kühlmittel in die Rotorwelle (2) einzuleiten, und wobei der Innendurchmesser der Öllanze sich zur Rotorwelle (2) hin verjüngt, um den Druck des einströmenden Kühlmittels zu erhöhen.

4. Die Rotoranordnung (1) nach einem der Ansprüche 1 bis 3, wobei im Inneren der Rotorwelle (2) ein Ölführungselement (23) vorgesehen ist, um einen ersten Teil des eingebrachten Kühlmittels durch den Transformator (5) und einen zweiten Teil des eingebrachten Kühlmittels vorbeizuleiten.

5. Die Rotoranordnung (1) nach einem der Ansprüche 1 bis 4, wobei die Rotorwelle (2) in ihrem Mantel radiale Bohrungen (20, 21) aufweist, um vor und/oder nach einem Durchströmen des Transformators (5) mit Kühlmittel das Kühlmittel aus der Rotorwelle (2) auszuleiten.

6. Eine Rotoranordnung (1) nach einem der vorhergehenden Ansprüche umfassend einen innerhalb der Rotorwelle (2) angeordneten und elektrisch zwischen die Sekundärseite des Transformators (5) und die Erregerwicklung gekoppelten Gleichrichter (14).

7. Die Rotoranordnung (1) nach einem der vorhergehenden Ansprüche, wobei der Transformator (5) einen statorfesten, primärseitigen Ferritkern (6) umfasst, in welchen eine primärseitige Wicklung (10) des Transformators (5) eingelegt ist, und einen relativ zum primärseitigen Ferritkern (6) verdrehbaren mit der Rotorwelle (2) drehfest gekoppelten sekundärseitigen Ferritkern (7) umfasst, in welchen eine sekundärseitige Wicklung (12) des Transformators (5) eingelegt ist.

8. Die Rotoranordnung (1) nach Anspruch 7, wobei der primärseitige Ferritkern (6) einen radial nach außen weisenden Abschnitt umfasst und/oder der sekundärseitige Ferritkern (7) einen radial nach innen weisenden Abschnitt umfasst.

9. Die Rotoranordnung (1) nach Anspruch 7 oder 8, wobei der primärseitige Ferritkern (6) über eine Klebeverbindung oder eine mechanische Verbindung in Form einer axialen Klemmung oder einem Formschluss gehalten wird.

10. Die Rotoranordnung (1) nach einem der vorhergehenden Ansprüche, ferner umfassend
einen elektrisch mit der Primärseite des Transformators (5) gekoppelten Wechselrichter.

11. Die Rotoranordnung (1) nach einem der vorhergehenden Ansprüche, wobei sich die Erregerwicklung axial von einem Anfangsbereich bis zu einem Endbereich entlang der Rotorwelle (2) erstreckt und wobei der Transformator (5) axial zwischen dem Anfangsbereich und dem Endbereich der Erregerwicklung innerhalb der Rotorwelle (2) angeordnet ist.

12. Eine fremderregte Synchronmaschine, umfassend einen Stator;
und eine Rotoranordnung (1) nach einem der vorhergehenden Ansprüche.
